# EUROPÄISCHE PATENTSCHRIFT

(11) **EP 0 457 249 B1**
(45) Veröffentlichungstag und Bekanntmachung des Hinweises auf die Patenterteilung: **06.09.1995**
(21) Anmeldenummer: 91107736.0
(22) Anmeldetag: 13.05.1991
(51) Int. Cl.: B60D 1/28

(54) **Anhängerkupplung Stichwort: Verliersicherung mit Wackelabstand**
Trailer coupling key word: securing device with mechanical play
Attelage de remorque mot clef: dispositif antiperte avec distance de sécurité

(30) Priorität: 14.05.1990 DE 4015473
(43) Veröffentlichungstag der Anmeldung: 21.11.1991
(73) Patentinhaber: ROCKINGER Spezialfabrik für Anhängerkupplungen GmbH & Co., D-80904 München (DE)
(72) Erfinder: Glässner, Ralf, W-8060 Dachau (DE); Breu, Johann, W-8000 München 71 (DE)
(74) Vertreter: Weickmann, Heinrich, Dipl.-Ing.

(56) Entgegenhaltungen:
- EP-A- 0 000 325
- DE-A- 3 842 271
- DE-C- 511 434
- FR-A- 2 568 194
- GB-A- 467 185

## Beschreibung

Die Erfindung betrifft eine Anhängerkupplung für ein Kraftfahrzeug,
bei der ein Kupplungskörper mit einer Zugstange vereinigt ist,
diese Zugstange in einer Bohrung eines Zugstangenlagers aufgenommen ist,
die Zugstange mit dem Zugstangenlager ggf.unter Einschaltung mindestens eines elastischen Druckringes axial verspannt ist, und zwar dadurch,
daß sich eine Stützfläche des Kupplungskörpers axial gegen ein kupplungskörperseitiges Ende des Zugstangenlagers abstützt, daß eine Spannmutter auf einen kupplungskörperfernen Gewindeendabschnitt der Zugstange aufgeschraubt und durch ein lösbares Sicherungselement an der Zugstange auf der kupplungskörperfernen Seite der Spannmutter gesichert ist und daß diese Spannmutter mittelbar oder unmittelbar auf das kupplungskörperferne Endes des Zugstangenlagers einwirkt.

Bei einer aus der EP-A-0 000 325 bekannten Anhängerkupplung dieser Art ist die Spannmutter von einer Kronenmutter gebildet und die Kronenmutter durch einen Splint gesichert, welcher den Gewindeabschnitt der Zugstange durchsetzt und mit mindestens einer Kronenkerbe in Eingriff steht. Nach Erreichen eines vorgeschriebenen Anzugsdrehmoments wird dieser Splint gesetzt. Der Splint kann nur gesetzt werden, wenn die jeweilige Kronenkerbe in Flucht mit einer Durchgangsbohrung des Gewindeabschnitts der Zugstange ist. Dies kann dazu führen, daß man, um den Splint überhaupt setzen zu können, das vorgeschriebene Anzugsdrehmoment der Spannmutter überschreiten oder unterschreiten muß, was in jedem Fall unzweckmäßig ist.

Es hat sich überdies gezeigt, daß die Splintsicherung allenfalls als eine Verliersicherung wirksam ist, nicht aber im Stande ist, ein ggf. entsprechendes Losdrehmoment aufzufangen, da der Splint unter der Wirkung eines solchen Losdrehmoments abscheren kann.

Aber auch die Wirkung der Splintsicherung als Verliersicherung ist mit entscheidenden Nachteilen behaftet: Wenn das vorgeschriebene Anzugsdrehmoment der Spannmutter etwa aus den weiter oben angegebenen Gründen nicht richtig eingestellt ist, so können sich die Gewindegänge der Kronenmutter und der Zugstange durch dauernde dynamische Belastung gegeneinander ausschlagen, ggf. soweit, daß unter dem Einfluß einer großen Zugbelastung die Gewindegänge abgestreift werden und sich die Kupplung aus dem Zugstangenlager löst. Die Splintsicherung kann dies nicht verhindern. Die Möglichkeit einer frühzeitigen Erkennung des Bevorstehens dieser Situation ist nicht gegeben.

Weiterhin ist es denkbar, daß die Kupplung in dem Zugstangenlager gleichzeitig einer Zugbelastung und einer Drehbelastung ausgesetzt ist, so daß die Kronenmutter gegen Drehung am Zugstangenlager gehemmt ist und sich die Zugstange in der Kronenmutter dreht. Dann wird der Splint abgeschert und die Verliersicherung außer Kraft gesetzt. Die Kronenmutter kann sich dann in relativ kurzer Zeit vom Gewinde der Zugstange losdrehen, so daß kaum eine Chance besteht, bei noch so regelmäßigen Inspektionen die Lockerung vor dem vollständigen Verbindungsverlust zu erkennen.

Der Erfindung liegt die Aufgabe zugrunde, bei einer Anhängerkupplung der eingangs bezeichneten Art dafür zu sorgen, daß ein Versagen der Verbindung zwischen Zugstange und Zugstangenlager vermieden wird.

Zur Lösung dieser Aufgabe wird erfindungsgemäß vorgeschlagen, daß das lösbare Sicherungselement in solchem Abstand von der Spannmutter an der Zugstange angeordnet ist, daß im Falle einer Lockerung der Spannmutter vor oder bei Eintritt von deren Anlage an dem Sicherungselement eine Lockerung des Kupplungskörpers ohne wesentliche Hilfsmittel feststellbar ist.

Bei der erfindungsgemäßen Lösung kann eine Lockerung des Kupplungskörpers eintreten, wenn oder schon bevor die Spannmutter an dem Sicherungselement zur Anlage kommt. Ist diese Anlage einmal erreicht, so besteht durch diese Anlage eine erhebliche Verzögerung weitergehender Lockerung der Spannmutter. Es ist also damit zu rechnen, daß bei regelmäßig durchgeführten Kontrollen die Lockerung des Kupplungskörpers etwa durch einen von Hand durchgeführten Wackelversuch am Kupplungskörper erkannt und behoben werden kann.

Die erfindungsgemäße Art der Sicherung ist von besonderem Interesse dann, wenn ein elastischer Druckring zwischen das Zugstangenlager einerseits und den Kupplungskörper oder die Spannmutter andererseits eingeschaltet ist. Ein solcher an sich bekannter elastischer Druckring führt dazu, daß auch bei erheblicher Lockerung der Spannmutter zunächst keine von Hand feststellbare Lockerung des Kupplungskörpers erkennbar wird. Wenn aber nun in erfindungsgemäßer Weise ein Sicherungselement in Abstand von der Spannmutter in deren ordnungsgemäßer Anzugsstellung vorgesehen ist, so kann der Abstand zwischen diesem Sicherungselement und der Spannmutter so gewählt werden, daß bei oder vor Anlauf der Spannmutter an dem Sicherungselement der elastische Druckring bzw. die elastischen Druckringe weitgehend entspannt sind und dann durch einen Wackelversuch die Lockerung des Kupplungskörpers für den Kontrolleur ohne weiteres erkennbar ist.

Das erfindungsgemäß vorgesehene Sicherungselement kann von einem Sicherungsring gebildet sein, der am kupplungskörperfernen Ende der Kupplungsstange befestigt wird, beispielsweise in einer Ringnut des Endabschnitts der Zugstange aufgenommen wird. Um der leichten Montage und Demontage Willen kann ein solcher Sicherungsring beispielsweise unterteilt und elastisch ausweitbar sein.

Um ein möglichst langes, nutzbares Gewinde bei gegebener Länge der Zugstange zu erzielen, empfiehlt es sich, daß das Sicherungselement unmittelbar angrenzend an das kupplungskörperferne Ende des Gewindeabschnitts angeordnet wird.

Nach einer bevorzugten Ausführungsform preßt die Spannmutter eine Druckscheibe mit einem zum Kupplungskörper hin erweiterten Innenkonus gegen einen komplementären Außenkonus der Zugstange, während die Druckscheibe axial auf das kupplungskörperferne Ende des Zugstangenlagers einwirkt. Bei dieser Ausführungsform läßt sich ein definiertes Anzugsdrehmoment einstellen, unabhängig von der Kompressionshärte etwaiger elastischer Druckringe. Es wird deshalb möglich, die Grundsicherung der Spannmutter durch deren elastische Verspannung mit der Druckscheibe und mit dem Außenkonus der Zugstange zu erzielen, wobei das Einstellen einer vorbestimmten elastischen Vorspannung noch dadurch erreicht werden kann, daß die Spannmutter und/oder der Druckring in sich kompressionselastisch ausgebildet werden.

Ist die Spannmutter mit dem richtigen Anzugsdrehmoment ordnungsgemäß angespannt, so besteht die Gefahr einer Lockerung der Spannmutter nicht. Durch den Verzicht auf die Sicherung mittels Splint und Kronenmutter läßt sich die Einstellung des richtigen Anzugsdrehmoments wesentlich erleichtern. Es sei aber hier vermerkt, daß die erfindungsgemäße Anordnung eines Sicherungselements in Abstand von der Spannmutter das gleichzeitige Vorhandensein einer Splintsicherung an einer als Kronenmutter ausgebildeten Spannmutter nicht ausschließt. Man könnte eine solche zusätzliche Sicherung durchaus als Vorsicherung weiterhin vorsehen, ohne daß die Wirkung des in Abstand von der Spannmutter vorhandenen Sicherungselements verlorengeht allerdings mit dem der Kronenmutter-Splintsicherung zukommenden Nachteil, daß die Einstellung eines vorgeschriebenen Anzugsdrehmoments erschwert wird und außerdem die Notwendigkeit einer Durchbohrung der Zugstange im Bereich ihres Gewindeabschnitts besteht. Es verdienen deshalb, wenn man schon zusätzlich zu der durch die Vorspannung der Spannmutter zu schaffenden Grundsicherung eine weitere Sicherung gegen Lösung der Spannmutter vorsehen will, andere Vorsicherungen den Vorzug und hier sei insbesondere die Möglichkeit erwähnt, daß die Druckscheibe auf der Zugstange gegen Verdrehung dadurch gesichert ist, daß an dem Innenkonus der Druckscheibe und/oder an dem Außenkonus der Zugstange eine Verrippung angebracht ist.

Eine andere Möglichkeit besteht darin, daß die Spannmutter gegen Verdrehung dadurch gesichert ist, daß von den gegenseitigen Anlageflächen der Spannmutter und der Druckscheibe mindestens eine mit einer Verrippung versehen ist.

Besonders vorteilhaft ist eine Lösung, bei welcher an der Druckscheibe zwei Verrippungen angebracht sind, nämlich eine Verrippung an dem Innenkonus und eine Verrippung an der der Spannmutter zugekehrten Anlagefläche. Der besondere Vorteil dieser Lösung liegt darin, daß die beiden Vorrichtungen an der Druckscheibe in einem Arbeitsgang hergestellt werden können.

Das Zugstangenlager kann in bekannter Weise an einem Träger des jeweiligen Kraftfahrzeugs befestigt oder zur Befestigung an diesem Träger ausgebildet sein.

Besonderen Vorzug im Rahmen der durch die Erfindung aufgezeigten Möglichkeiten findet eine Lösung, bei der die Spannmutter gegen Losdrehen aus ihrer durch das Anzugsdrehmoment bestimmten Stellung durch Verspannung mit der Zugstange ggf. unter Vermittlung einer Druckscheibe und ggf. unter Verwendung einer oder mehrerer Anlagevorrichtungen gesichert ist und bei der andererseits ein ringförmiges zusätzliches Sicherungselement in solchem Abstand von der ordnungsgemäß angezogenen Spannmutter liegt, daß spätestens bei Berührung zwischen der sich lockernden Spannmutter und dem ringförmigen Sicherungselement die Lockerung des Kupplungskörpers soweit fortgeschritten ist, daß sie entweder durch das Fahrverhalten oder durch einen Wackelversuch am Kupplungskörper ermittelt werden kann. Diese Lösung läßt zum einen eine exakte Einstellung des vorgeschriebenen Anzugsdrehmoments zu ohne Behinderung durch eine Kronenmutter, schafft zum zweiten eine Redundanzsicherung für den bei vorschriftsmäßiger Einstellung des Nutdrehmoments ohnehin nicht zu erwartenden Fall einer Lockerung der Spannmutter, und zwar eine Redundanzsicherung die zumindest solange hält, daß bei einigermaßen regelmäßiger Kontrolle eine Lockerung festgestellt werden kann, und läßt sich zum dritten leicht herstellen, weil es wesentlich einfacher ist, an der ohnehin als Drehteil hergestellten Zugstange einen Sitz für den Sicherungsring, etwa in Form einer Ringnut anzubringen, als eine Splintaufnahmebohrung durch die Zugstange zu schaffen.

Die beiliegenden Figuren erläutern die Erfindung anhand eines Ausführungsbeispiels; es stellen dar:
- Figur 1: eine Seitenansicht einer Anhängerkupplung mit einem Längsschnitt durch die Zugstangenlagerung;
- Figur 2: einen Schnitt nach Linie II - II der Figur 1;
- Figur 3: eine Draufsicht zu Figur 2 in Pfeilrichtung III der Figur 2;
- Figur 4: einen achsenthaltenden Schnitt durch eine Druckscheibe;
- Figur 5: eine Ansicht auf die Druckscheibe in Pfeilrichtung V der Figur 4;
- Figur 6: eine Ansicht auf die Druckscheibe in Pfeilrichtung VI der Figur 4;
- Figur 7: einen Schnitt nach Linie VII - VII der Figur 4, dieser Schnitt hinsichtlich des Verriegelungsprofils gleichzeitig entsprechend dem Schnitt VIII - VIII der Figur 5.

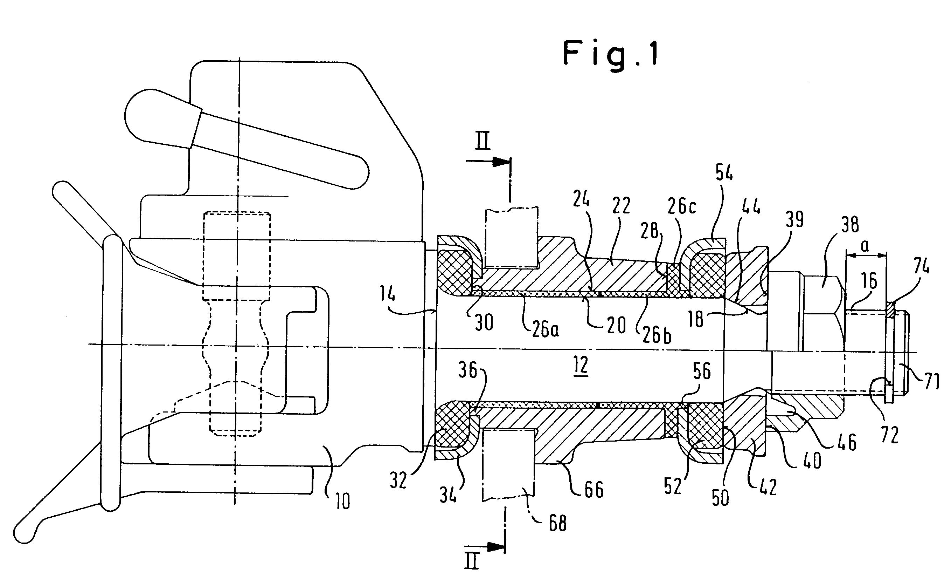

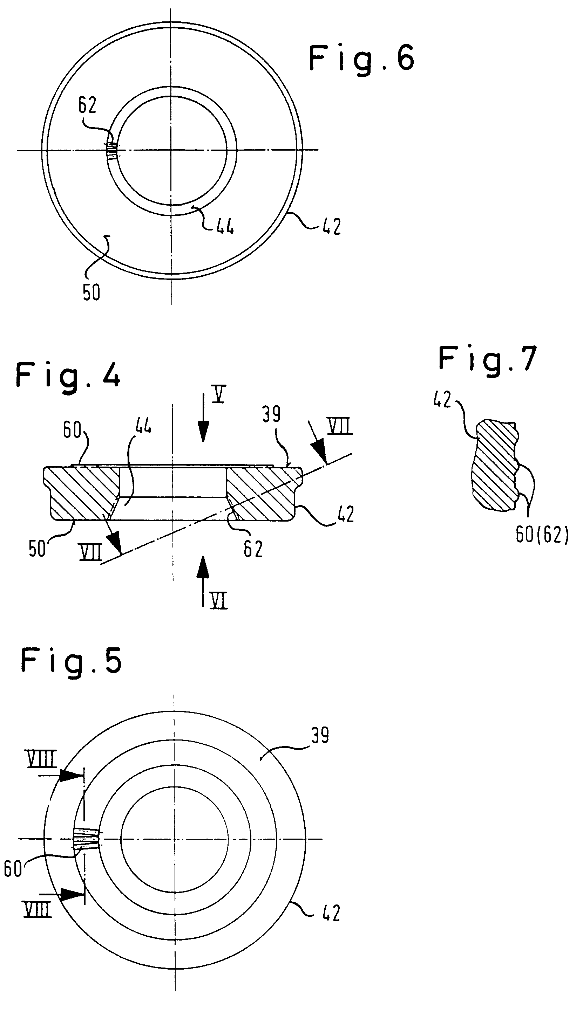

In Figur 1 ist ein Kupplungskörper mit 10 bezeichnet. An diesen Kupplungskörper 10 schließt sich einstückig eine Zugstange 12 an. Im Übergang zwischen dem Kupplungskörper 10 und der Zugstange 12 ist eine Stützfläche 14 ausgebildet. Am kupplungskörperfernen Ende der Zugstange 12 ist ein Gewindeabschnitt 16 ausgebildet, an den sich zum Kupplungskörper 10 hin ein Außenkonus 18 anschließt; dieser Außenkonus 18 geht in einen zylindrischen Abschnitt 20 der Zugstange 12 über. Die Zugstange 12 ist von einem Zugstangenlager 22 in dessen zylindrischer Innenbohrung 24 aufgenommen. Dabei ist zwischen der Innenbohrung 24 und der Zugstange 12 ein zweiteiliges Futter 26a, 26b aufgenommen. Der Futterteil 26b besitzt dabei einen Radialflansch 26c, der an einer Endfläche 28 des Zugstangenlagers 22 anliegt. Zwischen der Stützfläche 14 des Kupplungskörpers 10 und einer kupplungskörperseitigen Endfläche 30 des Zugstangenlagers 22 ist eine Gummifeder eingesetzt, die durch einen Federteller 34 gestützt ist. Der Federteller 34 sitzt auf einem Zentrierbund 36 des Zugstangenlagers 22. Auf den Gewindeabschnitt 16 ist eine Spannmutter 38 aufgeschraubt. Diese Spannmutter 38 wirkt mit einer Anlagefläche 40 gegen eine Anlagefläche 39 einer Druckscheibe 42. Die Druckscheibe 42 weist einen Innenkonus 44 auf, der durch die Spannmutter 38 gegen den Außenkonus 18 mit Vorspannung angepreßt ist. Zur Vergrößerung der Elastizität und damit der Vorspannbarkeit ist die Spannmutter 38 mit einer Ringnut 46 ausgeführt, so daß nur die Anlagefläche 40 gegen die Druckscheibe 42 anliegt. An der Anlagefläche 50 der Druckscheibe 42 liegt eine Gummifeder 52 an. Diese Gummifeder 52 ist durch einen Federteller 54 gestützt, welcher auf einem Zentrierbund 56 des Futterteils 26b zentriert ist. Die Gummifedern 32 und 52 sind zusammen mit ihren Federtellern 34 und 54 und mit dem Zugstangenlager 22 zwischen die Stützfläche 14 des Kupplungskörpers und die Anlagefläche 50 der Druckscheibe 42 unter Vorspannung eingespannt. Dabei liegt nur ein kleiner Teil der durch die Spannmutter 38 insgesamt aufgebrachten Kraft in der Teilefolge 32, 34, 22, 26c, 52, 54. Der größte Teil der aufgebrachten Spannung ist zwischen dem Außenkonus 18 und der Spannmutter 38 wirksam. An der Anlagefläche 39 der Druckscheibe 42 ist eine erste Verrippung 60 angebracht (Figur 4), deren Profil aus Figur 7 zu ersehen ist. Eine zweite Verrippung 62 ist an dem Innenkonus 44 angebracht, deren Profil ebenfalls der Figur 7 entspricht.

Durch die Verrippungen 60, 62 der Druckscheibe 42 wird ein Festsitz sowohl auf dem Außenkonus 18 der Zugstange 12 als auch auf der Anlagefläche 39 der Mutter 38 erreicht. Somit ist die Mutter 38 auch gegen Verdrehung relativ zur Zugstange 12 gesichert. Bei dieser Schraubensicherung ist ein weiteres Anziehen nach Erreichen des optimalen Drehmoments nicht erforderlich, so daß das optimale Drehmoment tatsächlich eingestellt werden kann. Dadurch ergibt sich auch im schlechtesten Fall eine erheblich höhere Vorspannkraft und damit eine bessere Sicherung der Druckscheibe 42 gegen Abheben vom Außenkonus der Zugstange 12.

Es ergeben sich erhebliche Kosteneinsparungen durch Wegfall von Splintbohrungen am Ende der Zugstange,durch Wegfall des Splintes und durch Materialeinsparungen an der Zugstange. Da bisher schon die Druckscheibe nach dem Schmieden kalibriert wurde und nun die Verrippung ebenfalls beim Vorgang der Kalibrierung aufgebracht werden kann, ergeben sich andererseits keinerlei Mehrkosten.

Ein weiterer Vorteil entsteht noch bei der Montage dadurch, daß das zeitaufwendige Einsetzen des Splintes entfällt.

Besonders bedeutsam ist, daß bei einer Zugbelastung an der Zugstange 12 ein Abheben der Druckscheibe 42 von dem Außenkonus 18 verhindert ist und daß zwischen diesen Teilen stets auch unter Zugbelastungen eine gewisse Restklemmkraft besteht im Hinblick auf Dreheinwirkungen, die gleichzeitig mit der Zugwirkung auftreten können.

Das Zugstangenlager 22 ist mit einem Befestigungsflansch 66 versehen, der mit einem Träger, d.h. mit einer Traverse 68, durch Schrauben verschraubt ist, welche Bohrungen 70 des Flansches 66 durchsetzen.

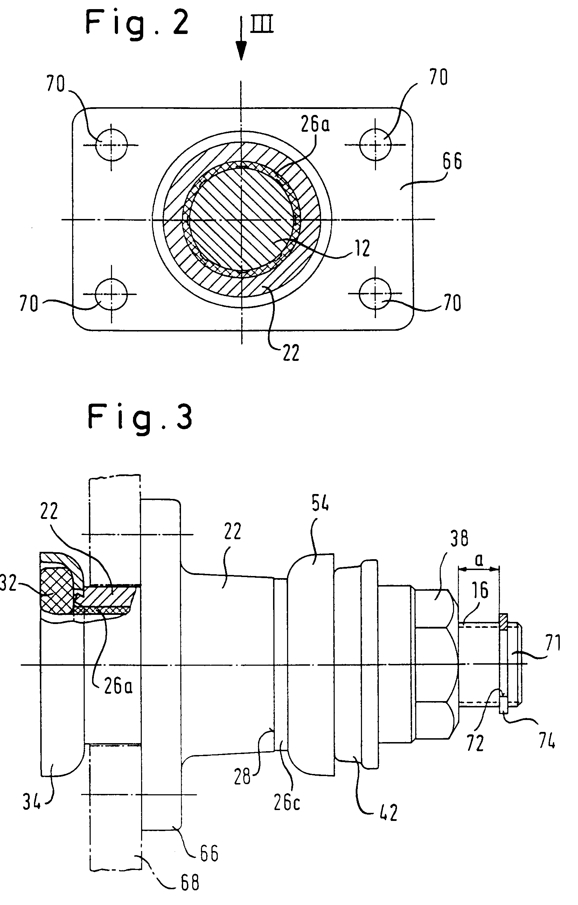

Wie aus Figur 1 und insbesondere aus Figur 3 zu ersehen ist, schließt sich an den Gewindeabschnitt 16 ein Endabschnitt 71 der Zugstange 12 an. In diesem Endabschnitt 71 ist am Ende des Gewindeabschnitts 16 eine Ringnut 72 eingearbeitet, die einen Sicherungsring 74 in Form eines einfach unterteilten und elastisch ausweitbaren Metallrings aufnimmt. Dieser Ring 74 ist in einem solchen Abstand a von der Spannmutter 38 angeordnet, daß bei einer an sich nicht zu erwartenden Lockerung der Spannmutter 38 die Gummifedern 32, 52 im wesentlichen vollständig entspannt ist, bevor die Spannmutter 38 zur Anlage gegen den Sicherungsring 74 gelangt. Ist diese Lockerung eingetreten, so fängt die Zugstange 12 in dem Zugstangenlager 22 axial und/oder radial zu wackeln an. Der Führer des Fahrzeugs kann dieses Wackeln aus dem Fahrverhalten entnehmen. Überdies kann man bei einer Inspektion durch einen Wackelversuch an dem Kupplungskörper 10 feststellen, ob die Zugstange 12 noch ordnungsgemäß gelagert ist oder ob eine Lockerung der Spannmutter 38 eingetreten ist, die dann behoben werden muß.

Der Sicherungsring 74 kann in seiner Eintauchtiefe in den Endabschnitt 71 und in seiner axialen Breite beliebig bemessen werden, ohne daß die notwendige Festigkeit der Verbindung zwischen Endabschnitt 71 und Zugstange 12 beeinträchtigt wird. Deshalb kann der Sicherungsring 74 jedenfalls vorübergehend durchaus die an der Zugstange auftretenden Zugkräfte aufnehmen, bis spätestens nach der nächstfälligen Inspektion das Wackeln festgestellt und für Abhilfe Sorge getragen wird. Dieses steht im Gegensatz zu einer Sicherung durch einen Splint in Verbindung mit einer als Kronenmutter ausgebildeten Spannmutter. Dort ist man im Hinblick auf die Schwächung der Zugstange und im Hinblick auf die Bemessung der Kronenmutter an ein relativ geringes Querschnittsmaß des Splintes gebunden, so daß der Splint als Aufnahme für die Betriebszugkräfte und Betriebsdrehmomente nicht in Frage kommt. Ein weiterer Vorteil des Sicherungsrings 74 gegenüber einer Kronenmutter-Splintsicherung liegt darin, daß der Sicherungsring 74 keinerlei Abscherbelastungen durch Torsion ausgesetzt werden kann. Der Sicherungsring sollte so bemessen werden, daß er dem Weiterdrehen der Spannmutter einen Widerstand von mindestens 700 Nm entgegensetzt.

## Patentansprüche

1. Anhängerkupplung für ein Kraftfahrzeug, bei der ein Kupplungskörper (10) mit einer Zugstange (12) vereinigt ist,
diese Zugstange (12) in einer Bohrung (24) eines Zugstangenlagers (22) aufgenommen ist,
die Zugstange (12) mit dem Zugstangenlager (22) ggf. unter Einschaltung mindestens eines elastischen Druckringes (32, 52) axial verspannt ist, und zwar dadurch,
daß sich eine Stützfläche (14) des Kupplungskörpers (10) axial gegen ein kupplungskörperseitiges Ende des Zugstangenlagers (22) abstützt, daß eine Spannmutter (38) auf einen kupplungskörperfernen Gewindeendabschnitt (16) der Zugstange (12) aufgeschraubt und durch ein lösbares Sicherungselement (74) an der Zugstange auf der kupplungskörperfernen Seite der Spannmutter (38) gesichert ist und daß diese Spannmutter mittelbar oder unmittelbar auf das kupplungskörperferne Ende des Zugstangenlagers (22) einwirkt,
**dadurch gekennzeichnet,**
daß das lösbare Sicherungselement in solchem Abstand von der Spannmutter (38) an der Zugstange angeordnet ist, daß im Falle einer Lockerung der Spannmutter (38) vor oder bei Eintritt von deren Anlage an dem Sicherungselement (74) eine Lockerung des Kupplungskörpers (10) ohne wesentliche Hilfsmittel feststellbar ist.

2. Anhängerkupplung nach Anspruch 1
**dadurch gekennzeichnet,**
daß bei Vorhandensein mindestens eines elastischen Druckrings (32, 52), welcher bei ordnungsgemäß angezogener Spannmutter (38) unter Druckvorspannung steht, der Abstand des Sicherungselements (74) von der ordnungsgemäß angezogenen Spann mutter (38) derart bemessen ist, daß die axiale Vorspannung des elastischen Druckrings (32,52) im wesentlichen aufgehoben ist, wenn oder bevor die Spannmutter (38) im Falle einer Lockerung gegen das Sicherungselement (74) zum Anschlag kommt.

3. Anhängerkupplung nach einem der Ansprüche 1 und 2,
**dadurch gekennzeichnet,**
daß das Sicherungselement (74) von einem Sicherungsring (74) gebildet ist.

4. Anhängerkupplung nach Anspruch 3,
**dadurch gekennzeichnet,**
daß der Sicherungsring (74) in einer Ringnut (72) des Endabschnitts (71) lösbar aufgenommen ist.

5. Anhängerkupplung nach einem der Ansprüche 3 und 4,
**dadurch gekennzeichnet,**
daß der Sicherungsring (74) ein einfach unterteilter elastisch ausweitbarer Sicherungsring ist.

6. Anhängerkupplung nach einem der Ansprüche 1 bis 5,
**dadurch gekennzeichnet,**
daß das Sicherungselement (74) unmittelbar angrenzend an das kupplungskörperferne Ende des Gewindeabschnitts (16) angeordnet ist.

7. Anhängerkupplung nach einem der Ansprüche 1 bis 6,
**dadurch gekennzeichnet,**
daß die Spannmutter (38) eine Druckscheibe (42) mit einem zum Kupplungskörper (10) hin erweiterten Innenkonus (44) gegen einen komplementären Außenkonus (18) der Zugstange (12) preßt und daß die Druckscheibe (42) axial auf das kupplungskörperferne Ende (28) des Zugstangenlagers (22) einwirkt.

8. Anhängerkupplung nach Anspruch 7,
**dadurch gekennzeichnet,**
daß die Druckscheibe (42) auf der Zugstange (12) gegen Verdrehung dadurch gesichert ist, daß an dem Innenkonus (44) der Druckscheibe (42) und/oder an dem Aussenkonus (18) der Zugstange (12) eine Verrippung (62) angebracht ist.

9. Anhängerkupplung nach Anspruch 8,
**dadurch gekennzeichnet**,
daß die Verrippung (62) an dem Innenkonus (44) der Druckscheibe (42) angebracht ist.

10. Anhängerkupplung nach einem der Ansprüche 8 und 9,
**dadurch gekennzeichnet,**
daß die Rippen der Verrippung (62) in Ebenen liegen, welche die Achse der Zugstange enthalten.

11. Anhängerkupplung nach einem der Ansprüche 8 bis 10,
**dadurch gekennzeichnet,**
daß die Rippen der Verrippung (62) in einer zur jeweiligen Ortsmantellinie des Innen- bzw. Außenkonus (44, 18) senkrechten Schnittebene betrachtet jeweils teilkreisförmig oder teilwellenförmig gerundet sind.

12. Anhängerkupplung nach einem der Ansprüche 7 bis 11,
**dadurch gekennzeichnet,**
daß die Spannmutter (38) gegen Verdrehung dadurch gesichert ist, daß von den gegenseitigen Anlageflächen (39, 40) der Spannmutter (38) und der Druckscheibe (42) mindestens eine (39) mit einer Verrippung (60) versehen ist.

13. Anhängerkupplung nach Anspruch 12,
**dadurch gekennzeichnet,**
daß die Rippen der Verrippung (60) in Ebenen liegen, welche die Achse der Zugstange (12) enthalten.

14. Anhängerkupplung nach einem der Ansprüche 12 oder 13,
**dadurch gekennzeichnet,**
daß die Rippen der Verrippung (60) in einer zum jeweiligen Ortsradius senkrechten Schnittebene betrachtet teilkreisförmig oder teilwellenförmig ausgebildet sind.

15. Anhängerkupplung nach einem der Ansprüche 7 bis 14,
**dadurch gekennzeichnet,**
daß an der Druckscheibe (42) zwei Verrippungen (60, 62) angebracht sind, nämlich eine Verrippung (62) an dem Innenkonus (44) und eine Verrippung (60) an der der Spannmutter (38) zugekehrten Anlagefläche (39).

16. Anhängerkupplung nach einem der Ansprüche 1 bis 15,
**dadurch gekennzeichnet,**
daß die Spannmutter (38) in sich kompressionselastisch ist.

17. Anhängerkupplung nach einem der Ansprüche 1 bis 16,
**dadurch gekennzeichnet,**
daß das Zugstangenlager (22) an einem Träger (68) des jeweiligen Kraftfahrzeugs befestigt oder zur Befestigung an diesem Träger (68) ausgebildet ist.

## Claims

1. Trailer coupling for a motor vehicle, in which a coupling body (10) is joined to a draw bar (12), this draw bar (12) is held in a hole (24) in a draw bar bearing (22), the draw bar (12) is axially secured to the draw bar bearing (22), possibly with the insertion of at least one elastic thrust ring (32, 52), such that a support surface (14) of the coupling body (10) is supported axially against an end of the draw bar bearing (22) which is on the coupling body side, that a clamping nut (38) is screwed onto a threaded portion (16) of the draw bar (12) which is remote from the coupling body and secured by a removable retaining element (74) on the draw bar on the side of the clamping nut (38) which is remote from the coupling body, and that this clamping nut acts indirectly or directly on the end of the draw bar bearing (22) which is remote from the coupling body, characterised in that the removable retaining element is arranged at a distance from the clamping nut (38) on the draw bar such that, should the clamping nut (38) loosen before or when it bears against the retaining element (74), loosening of the coupling body (10) can be detected without any essential aids.

2. Trailer coupling according to claim 1, characterised in that, with at least one elastic thrust ring (32, 52) which is subjected to an initial compressive stress when the clamping nut (38) is properly tightened being provided, the distance of the retaining element (74) from the properly tightened clamping nut (38) is determined such that the initial axial stress in the elastic thrust ring (32, 52) is essentially removed when or before the clamping nut (38) comes into contact with the retaining element (74) if loosening occurs.

3. Trailer coupling according to either of claims 1 and 2, characterised in that the retaining element (74) is formed by a retaining ring (74).

4. Trailer coupling according to claim 3, characterised in that the retaining ring (74) is held in a ring groove (72) in the end portion (71) such that it can be removed.

5. Trailer coupling according to one of claims 3 and 4, characterised in that the retaining ring (74) is a single-split retaining ring which can be elastically widened.

6. Trailer coupling according to one of claims 1 to 5, characterised in that the retaining element (74) is arranged directly adjacent to the end of the threaded portion (16) which is remote from the coupling body.

7. Trailer coupling according to one of claims 1 to 6, characterised in that the clamping nut (38) presses a thrust washer (42) with an inner cone (44) which widens towards the coupling body (10) against a complementary outer cone (18) of the draw bar (12), and that the thrust washer (42) acts axially on the end (28) of the draw bar bearing (22) which is remote from the coupling body.

8. Trailer coupling according to claim 7, characterised in that the thrust washer (42) is secured against twisting on the draw bar (12) by providing ribbing (62) on the inner cone (44) of the thrust washer (42) and/or on the outer cone (18) of the draw bar (12).

9. Trailer coupling according to claim 8, characterised in that the ribbing (62) is provided on the inner cone (44) of the thrust washer (42).

10. Trailer coupling according to one of claims 8 and 9, characterised in that the ribs of the ribbing (62) lie in planes which contain the axis of the draw bar.

11. Trailer coupling according to one of claims 8 to 10, characterised in that, viewed in a sectional plane which is normal to the respective local generator of the inner or outer cone (44, 18), the ribs of the ribbing (62) are in each case rounded in the form of partial circles or partial waves.

12. Trailer coupling according to one of claims 7 to 11, characterised in that the clamping nut (38) is secured against twisting by providing at least one (39) of the complementary contact surfaces (39, 40) of the clamping nut (38) and the thrust washer (42) with ribbing (60).

13. Trailer coupling according to claim 12, characterised in that the ribs of the ribbing (60) lie in planes which contain the axis of the draw bar (12).

14. Trailer coupling according to one of claims 12 and 13, characterised in that, viewed in a sectional plane which is normal to the respective local radius, the ribs of the ribbing (60) are in the form of partial circles or partial waves.

15. Trailer coupling according to one of claims 7 to 14, characterised in that two ribbings (60, 62) are provided on the thrust washer (42), i.e. a ribbing (62) on the inner cone (44) and a ribbing (60) on the contact surface (39) which faces the clamping nut (38).

16. Trailer coupling according to one of claims 1 to 15, characterised in that the clamping nut (38) in itself exhibits elasticity of compression.

17. Trailer coupling according to one of claims 1 to 16, characterised in that the draw bar bearing (22) is fastened to a support (68) of the motor vehicle in question or is formed to be fastened to this support (68).

## Revendications

1. Attelage de remorque pour un véhicule automobile, dans lequel un corps d'attelage (10) est réuni à une barre d'attelage (12),
cette barre d'attelage (12) est reçue dans un perçage (24) d'un palier de barre d'attelage (22),
la barre d'attelage (12) est axialement bloquée par serrage dans le palier de barre d'attelage (22) avec interposition éventuelle d'au moins une bague de pression élastique (32, 52), et ce par le fait
qu'une face d'appui (14) du corps d'attelage s'appuie axialement contre une extrémité côté corps d'attelage du palier de barre d'attelage (22), qu'un écrou de serrage (38) est vissé sur une partie terminale filetée (16), éloignée du corps d'attelage, de la barre d'attelage (12) et est assujetti par un élément d'assujettissement amovible (74) sur la barre d'attelage sur le côté de l'écrou de serrage (38) qui est éloigné du corps d'attelage, et que cet écrou de serrage agit directement ou indirectement sur l'extrémité du palier de barre d'attelage (22) qui est éloignée du corps d'attelage,
**caractérisé** en ce que l'élément d'assujettissement amovible est disposé à une distance telle de l'écrou de serrage (38) sur la barre d'attelage qu'en cas de desserrage de l'écrou de serrage (38), avant ou lors de l'entrée en application de ce dernier contre l'élément d'assujettissement (74), un desserrage du corps d'attelage (10) peut être constaté sans aide notable.

2. Attelage de remorque selon la revendication 1, **caractérisé** en ce qu'en présence d'au moins une bague de pression élastique (32, 52), qui se trouve sous précontrainte de pression lorsque l'écrou de serrage (38) est correctement serré, la distance entre l'élément d'assujettissement (74) et l'écrou de serrage (38) correctement serré est dimensionnée de telle sorte que la précontrainte axiale de la bague de pression élastique (32, 52) est pratiquement supprimée lorsque ou avant que l'écrou de serrage (38) vienne, en cas de desserrage, buter contre l'élément d'assujettissement (74).

3. Attelage de remorque selon la revendication 1 ou 2, **caractérisé** en ce que l'élément d'assujettissement (74) est formé par une bague d'assujettissement (74).

4. Attelage de remorque selon la revendication 3, **caractérisé** en ce que la bague d'assujettissement (74) est reçue de façon amovible dans une rainure annulaire (72) de la partie terminale (71).

5. Attelage de remorque selon la revendication 3 ou 4, **caractérisé** en ce que la bague d'assujettissement (74) est une bague d'assujettissement à simple division, élastiquement élargissable.

6. Attelage de remorque selon l'une des revendications 1 à 5, **caractérisé** en ce que l'élément d'assujettissement (74) est disposé au voisinage direct de l'extrémité de la partie filetée (16) qui est éloignée du corps d'attelage.

7. Attelage de remorque selon l'une des revendications 1 à 6, **caractérisé** en ce que l'écrou de serrage (38) presse une rondelle de pression (42), pourvue d'un cône intérieur (44) élargi en direction du corps d'attelage (10), contre un cône extérieur complémentaire (18) de la barre d'attelage (12), et en ce que la rondelle de pression (42) agit axialement sur l'extrémité (28) du palier de barre d'attelage (22) qui est éloignée du corps d'attelage.

8. Attelage de remorque selon la revendication 7**, caractérisé** en ce que la rondelle de pression (42) est bloquée en rotation sur la barre d'attelage (12) par le fait qu'un nervurage (62) est prévu sur le cône intérieur (44) de la rondelle de pression (42) et/ou sur le côté extérieur (18) de la barre d'attelage (12).

9. Attelage de remorque selon la revendication 8, **caractérisé** en ce que le nervurage (62) est prévu sur le cône intérieur (44) de la rondelle de pression (42).

10. Attelage de remorque selon la revendication 8 ou 9, **caractérisé** en ce que les nervures du nervurage (62) se situent dans des plans qui contiennent l'axe de la barre d'attelage.

11. Attelage de remorque selon l'une des revendications 8 à 10, **caractérisé** en ce que les nervures du nervurage (62) sont, considérées dans un plan de coupe perpendiculaire à la génératrice locale respective du cône intérieur ou extérieur (44, 18), respectivement arrondies en forme de cercle partiel ou en forme d'ondulation partielle.

12. Attelage de remorque selon l'une des revendications 7 à 11, **caractérisé** en ce que l'écrou de serrage (38) est bloqué en rotation par le fait que, parmi les faces d'application mutuelle (39, 40) de l'écrou de serrage (38) et de la rondelle de pression (42) au moins une face (39) est pourvue d'un nervurage (60).

13. Attelage de remorque selon la revendication 12, **caractérisé** en ce que les nervures du nervurage (60) se situent dans des plans qui contiennent l'axe de la barre d'attelage (12).

14. Attelage de remorque selon la revendication 12 ou 13, **caractérisé** en ce que les nervures du nervurage (60) sont, considérées dans un plan de coupe perpendiculaire au rayon local respectif, configurées en forme de cercle partiel ou en forme d'ondulation partielle.

15. Attelage de remorque selon l'une des revendications 7 à 14, **caractérisé** en ce que deux nervurages (60, 62) sont prévus sur la rondelle de pression (42), à savoir un nervurage (62) sur le cône intérieur (44) et un nervurage (60) sur la face d'application (39) tournée vers l'écrou de serrage (38).

16. Attelage de remorque selon l'une des revendications 1 à 15, **caractérisé** en ce que l'écrou de serrage (38) est en soi élastique en compression.

17. Attelage de remorque selon l'une des revendications 1 à 16, **caractérisé** en ce que le palier de barre d'attelage (22) est fixé sur un élément porteur (68) du véhicule automobile concerné, ou est configuré en vue de sa fixation sur cet élément porteur (68).
